# EUROPÄISCHE PATENTANMELDUNG

(11) **EP 2 135 795 A1**
(43) Veröffentlichungstag der Anmeldung: **23.12.2009**
(21) Anmeldenummer: 08011132.1
(22) Anmeldetag: 19.06.2008
(51) Int. Cl.: B62D 1/19, F16F 9/52

(54) **Energie absorbierende Vorrichtung**

(71) Anmelder: ThyssenKrupp Presta Aktiengesellschaft, 9492 Eschen (LI)
(72) Erfinder: Kirmsze, Helmut, 9494 Schaan (LI); Battlogg, Stefan, 6771 St. Anton i.M. (AT); Elsensohn, Gernot, 6771 St. Anton i.M. (AT); Pösel, Jürgen, 6700 Bludenz (AT)
(74) Vertreter: Torggler, Paul Norbert

(57) **Zusammenfassung**

Eine Energie absorbierende Vorrichtung für den Insassenschutz in Fahrzeugen enthält ein fließfähiges Medium, das bei einer äußeren Krafteinwirkung durch mindestens eine eine Gegenkraft bestimmende Öffnung (4) gedrückt wird. Die Vorrichtung ist weiters mit einer Einrichtung (14) zur Beeinflussung der Temperatur des fließfähigen Mediums versehen.

## Beschreibung

Die Erfindung betrifft eine Energie absorbierende Vorrichtung für den Insassenschutz in Fahrzeugen, mit einem fließfähigen Medium, das bei einer äußeren Krafteinwirkung durch mindestens eine eine Gegenkraft bestimmende Öffnung gedrückt wird. Obwohl ein fließfähiges Medium auch gasförmig sein kann, so werden hier und im Folgenden darunter Medien in flüssigem Aggregatzustand verstanden, da nur flüssige Medien Gegenkräfte bewirken, die in die für die gewünschte Energieabsorption notwendige Größenordnung fallen.

Eine derartige Vorrichtung, eingebaut in eine Lenksäule eines Kraftfahrzeuges, ist beispielsweise aus der US 5,870,930 bekannt. Die Lenksäule weist teleskopisch ineinander schiebbare Teile auf, wobei ein Teil mit einem ringförmigen Behälter versehen ist, in den eine geeignete Flüssigkeit, beispielsweise ein fließfähiges Silikon, eingefüllt ist. Am zweiten Teil ist eine Manschette fixiert, die nach Art eines Kolbens in den Behälter eintaucht und die Flüssigkeit bei einem Aufprall durch einen Kranz von kleinen Öffnungen auspresst. Die Öffnungen sind von einem ringförmigen Berstelement überdeckt. Durch die aufgrund der Querschnittsverengung auftretende Gegenkraft wird ein Teil der Aufprallenergie absorbiert.

Aufprallenergie absorbierende Vorrichtungen sind in Fahrzeugen nicht nur an der Lenksäule, sondern auch an einer Reihe von anderen Bauteilen von Vorteil bzw. notwendig, beispielsweise an Kopfstützen, Sicherheitsgurten, Sitzen und Sitzelementen, Stoßfängern usw. Im Extremfall lassen sich in einem Kraftfahrzeug mehr als 20 unterschiedliche Einbauorte finden.

Ein wesentliches Problem dieser Vorrichtungen liegt darin, dass sie nur für einen einmaligen Gebrauch in einem Notfall vorgesehen sind und in den meisten Fällen überhaupt nicht zum Einsatz kommen. Dennoch sollten sie zumindest über zehn Jahre funktionsfähig bleiben, ohne dass die. Funktionsfähigkeit je überprüft werden kann.

Beispielsweise sollte eine teleskopisch verkürzbare Lenksäule einen Großteil der Aufprallenergie des Fahrers aufnehmen, also steif ausgeführt werden, wobei die Gegenkraft etwa 6000 N, maximal 8000 N betragen sollte. Ist der Fahrer angegurtet und leichtgewichtig, genügt eine Gegenkraft von maximal 2000 N. Allgemein ist bei Energieabsorptionssystemen für Lenksäulen die Aufgabe gestellt, die kinetische Energie, die der Fahrer als Resultat aus Geschwindigkeit des Fahrzeugs und Masse des Fahrers besitzt, so abzubauen, dass die dabei von der Lenksäule auf den Fahrer einwirkende Kraft möglichst gering ist. Neben den Rückhaltesystemen, wie Sicherheitsgurt und Airbag, kommt der Lenksäule selbst eine wesentliche Rolle zu. Insbesondere soll das Energieabsorptionssystem in der Lenksäule steuerbar oder besser regelbar sein, so dass Unterschiede im Gewicht des Fahrers, in der Position des Fahrers oder in der Tatsache, ob der Fahrer angegurtet ist oder nicht oder weiterer unterschiedlicher Parameter, durch das System berücksichtigt werden können. Je genauer die Regelung der Energieabsorption in der Lenksäule ermöglicht ist, desto höher ist die Überlebenschance des Fahrers bei einem Unfall.

In Fahrzeugen mit Airbag und Sicherheitsgurt kann man den Aufprall in zwei Wegstrecken unterteilen, nämlich in einen ersten Verzögerungsweg während der Airbag- und Gurtfunktion, der im Durchschnitt etwa 40 cm beträgt, und in einen anschließenden zweiten Verzögerungsweg während der Lenksäulenfunktion, der etwa 10 cm beträgt. Sinnvoll und effektiv ist es, den Gesamtweg von insgesamt ca. 50 cm zu nützen und in der Wegstreckensumme immer adäquat zu verzögern. Nur dies führt zu geringeren Belastungen für den Körper. Dies ist beispielsweise gemäß der aus der EP 1 795.428 gezeigten Einrichtung durch Regelung der Gegenkraft der Öffnung möglich, sodass die Energieabsorption nicht nur in Abhängigkeit von der Fahrzeugverzögerung, dem Aufprallwinkel, der Masse des Fahrers, usw. variabel eingestellt, sondern auch während des Aufpralls verändert werden kann.

Für die Regelung der an der Öffnung vorzusehenden Gegenkraft sind in der EP 1 795 428 verschiedene Möglichkeiten angegeben. Zum einen ist es denkbar, den Öffnungsquerschnitt zu ändern, beispielsweise durch Unterteilung der Öffnung in mehrere Kanäle, die einzeln gesperrt werden können, durch verstellbare Schieber, Blenden, usw. oder durch mindestens ein Ventil mit mehreren Öffnungsstellungen. Weiters ist es möglich, die Austrittsmenge pro Zeiteinheit zu variieren, beispielsweise durch Behälter mit über die Länge variierender Querschnittsfläche, sodass die ausgedrückte Menge pro Weg- bzw. Zeiteinheit schwankt.

Schließlich kann die Fließfähigkeit des Mediums beeinflusst werden, vor allem, wenn eine Flüssigkeit verwendet wird, die unter dem Einfluss eines elektrischen oder magnetischen Feldes ihre Viskosität ändert. Die Änderung der Fließfähigkeit ist von großer Bedeutung, da die Energieabsorption an unterschiedliche Ausgangszustände und Bedingungen angepasst werden kann und keine mechanisch beweglichen Teile notwendig sind. Vor allem magnetorheologische Flüssigkeiten sind besonders geeignet, weil im Gegensatz zu elektrorheologischen Flüssigkeiten relativ wenig Energie für den Aufbau bzw. die Änderung des Magnetfeldes zugeführt werden muss. Bei praktisch jedem der in den beschriebenen Energie absorbierenden Vorrichtungen verwendbaren Medien ändert sich die Viskosität in Abhängigkeit von der Temperatur, und die Medien sind umso zähflüssiger je kälter sie sind.

Der Temperaturbereich, in dem im Kraftfahrzeug die Funktionsfähigkeit der Einrichtungen sichergestellt sein sollte, erstreckt sich von mindestens -40°C bis +90°C. Es ist somit offensichtlich, dass die Fließeigenschaften nicht über den gesamten Temperaturbereich gleich sein können, und es ergibt sich daraus das Problem, dass temperaturbedingte Änderungen der Viskosität entsprechende Änderungen der Gegenkraft bedeuten.

Erfindungsgemäß wird zur Lösung dieses Problems nun vorgeschlagen, dass die Energie absorbierende Vorrichtung mit einer Einrichtung zur Beeinflussung der Temperatur des fließfähigen Mediums versehen ist.

Der kritische Temperaturbereich bei Fahrzeugen, in dem erfindungsgemäß eine Beeinflussung stattfinden soll, ist im Allgemeinen der Niedertemperaturbereich, sodass vorzugsweise eine Erwärmung des fließfähigen Mediums in Betracht zu ziehen ist. Beispielsweise kann eine Energie absorbierende Vorrichtung, die magnetorheologische Flüssigkeit auf der Basis von Glykol oder Silikonöl enthält, bei einer Normaleinsatztemperatur von +20°C bis +22°C, die etwa in Fahrzeugen mit Klimaanlagen vorherrscht, für eine Gegenkraft von 500 N bis 6000 N ausgelegt sein. Bei dieser Flüssigkeit erhöht sich der untere Gegenkraftwert auf ca. 4000 N, wenn die Umgebungstemperatur auf -40°C abgesunken ist, d.h. der Verstellbereich von ca. 5500 N bei Normaltemperatur hat sich auf 2000 N verringert.

Andererseits ist aber unter bestimmten klimatischen Voraussetzungen nicht auszuschließen, dass ein fließfähiges Medium durch allzu große Hitze ebenfalls so in seiner Viskosität verändert wird, dass eine Kühlung des Mediums vorteilhaft ist, um höhere Gegenkräfte zu bewirken. Beide Möglichkeiten lassen sich verwirklichen.

Das fließfähige Medium ist im Allgemeinen in einem Behälter enthalten, der die die Gegenkraft bestimmende Öffnung aufweist. Die Einrichtung zur Beeinflussung der Temperatur kann in einer ersten Ausführung daher an oder in der Behälterwand vorgesehen sein.

Aus der WO 2007/068016 ist bekannt, das Medium in einer dichten Kapsel bereitzustellen, die in den Behälter eingesetzt werden kann, und durch die äußere Krafteinwirkung platzt. Unter einer. Kapsel wird ein in sich geschlossener Behälter verstanden, der nur mit besonderem Aufwand geöffnet werden kann, und nach dem Öffnen nicht mehr geschlossen werden soll bzw. kann. Das Medium wird also in dieser Ausführung nicht einfach in einen Aufnahmeraum des Aufprallenergie absorbierenden Elementes eingefüllt, sondern es wird die gefüllte, gedichtete Kapsel eingesetzt. Das enthaltene Medium, dessen Haltbarkeit und Lagefähigkeit über den Einsatzzeitraum selbstverständlich gegeben sein muss, unterliegt in einer dicht verschlossenen Kapsel aus entsprechend beständigem Material keinen äußeren Einflüssen, die die Eigenschaften verändern könnten. Die Kapsel besteht daher insbesondere aus einem flexiblen Material, wie z.B. einem verschweißten Folienbeutel od. dgl., etwa aus einer Kunststoff- oder Aluminiumfolie, aus einem beschichteten Gewebe, aus Kevlarfasern, Glasfasern, etc. Die in den Behälter des Energie absorbierenden Elementes eingesetzte Kapsel überdeckt auch die Öffnung, durch die das Medium bei einem Aufprall ausgedrückt wird, sodass eine Berstscheibe oder ein anderer Verschluss für die Austrittsöffnung unnötig ist.

In einem derartigen Fall ist vorzugsweise vorgesehen, dass die Einrichtung zur Beeinflussung der Temperatur der Kapsel zugeordnet ist.

Die Normaltemperatur von +20°C bis +22°C wird, wie bereits erwähnt, wesentlich öfter weit unterschritten als überschritten. Viskositätsänderungen sind im Allgemeinen bei Minustemperaturen überproportional hoch. Bevorzugte Ausführungen der erfindungsgemäßen Energie absorbierenden Vorrichtung weisen daher Heizeinrichtungen zur Beeinflussung der Temperatur des fließfähigen Mediums auf. So kann zum Beispiel in einer ersten Ausführung ein Heizdraht in die Wandung des Behälters oder der Kapsel eingebettet sein.

Wird das Medium in eine Kapsel eingeschlossen, die in den Behälter eingesetzt wird, so kann die Kapsel aus Kunststoff bestehen, beispielsweise aus einer Heizfolie od. dgl. In einer anderen Ausführung ist die Anordnung eines Heizdrahtes auch im Inneren der Kapsel möglich, wobei der Heizdraht gewendelt oder sich geradlinig mittig erstrecken kann. Die Anschlussenden des Heizdrahtes sind durch die Kapselwand nach außen geführt, wobei die Durchtrittsstellen bevorzugt an der Schließstelle nach dem Befüllen der Kapsel mit dem Medium und der Heizeinrichtung vorgesehen werden können.

Der Heizdraht ist bevorzugt elektrisch isoliert, beispielsweise ein lackierter Draht. Die Heizeinrichtung kann sich beispielsweise bei der Inbetriebnahme des Fahrzeuges einschalten und mittels eines Bimetallschalters oder dergleichen bei Erreichen der gewünschten Temperatur ausschalten.

Der Heizdraht kann in einer weiteren Ausführung aus einem Material mit einem positiven Temperaturkoeffizienten bestehen, sodass er als Kaltleiter wirkt, in dem der Widerstand mit steigender Temperatur zunimmt. In diesem Fall beginnt der Strom bei tiefen Temperaturen mit der Inbetriebnahme des Fahrzeuges zu fließen und das Medium in der Vorrichtung wird erwärmt. Der Stromfluss verringert sich mit steigender Temperatur bis ein Gleichgewicht bei der Temperatur erreicht wird, bei der der Gegenkraftbereich der Öffnung die vorgegebene Größenordnung aufweist, die wie oben angeführt, beispielsweise 5500 N bis 6000 N umfasst.

In einer weiteren Ausführung kann durch die geeignete Beschaltung des Heizelements mit einem temperaturabhängigen Widerstand wie NTC- oder PTC-Widerstand (Material mit negativem bzw. positivem Temperaturkoeffizienten) der Strom durch das Heizelement automatisch der Temperatur angepasst werden. Beispielsweise kann ein PTC-Widerstand als diskretes Bauteil in Serie zum Heizdraht angeschlossen werden, um die Heizleistung über den Strom zu regeln.

Eine weitere Ausbaustufe ist die Regelung des Stroms über einen oder mehrere Temperaturfühler wie beispielsweise PT100 oder Thermoelemente, Regelelemente und Verstärker. Das ermöglicht die Verwendung einer lokaler Temperatur oder auch das gewichtete Mittel verschiedener Temperaturen als Eingangsparameter für die Stromregelung. Diese Elemente können im Medium, in der Kapsel oder auch außerhalb im Stromkreis angeordnet sein.

Nachstehend wird nun die Erfindung anhand der Figuren der beiliegenden Zeichnungen näher beschrieben, ohne darauf beschränkt zu sein. Es zeigen:
- Fig. 1: einen schematischen Ausschnitt aus einer Lenksäule mit einer erfindungsgemäßen Vorrichtung,
- Fig,2: eine schematische Schrägansicht der Vorrichtung,
- Fig. 3: eine Stirnansicht der Vorrichtung nach Fig. 2 mit Magnetfefdvenauf,
- Fig. 4, 5 und 6: Längsschnitte durch drei Ausführungsbeispiele der Vorrichtung,
- Fig. 7: eine schematische Schrägansicht einer Kapsel mit Heizeinrichtung, und
- Fig. 8 und 9: eine alternative Anordnung der Vorrichtung mit einer alternativen Ausleitung der Heizdrähte.

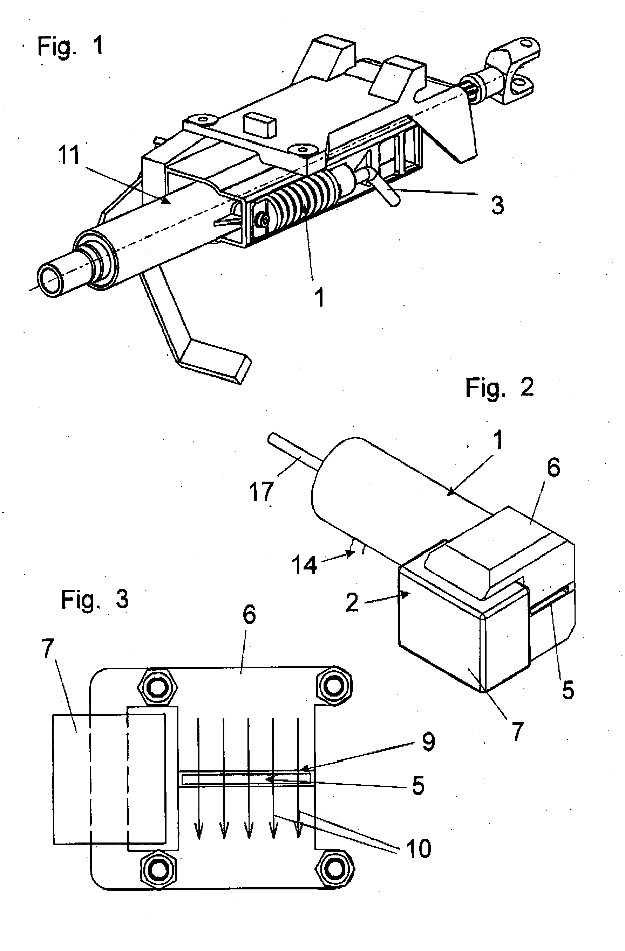

Eine Energie absorbierende Vorrichtung kann, wie Fig. 1 zeigt, beispielsweise an einer Lenksäule 11 parallel zu deren bei einem Zusammenstoß längenverschiebbaren Teilen vorgesehen sein. Die Vorrichtung weist einen Behälter 1 auf, dessen Volumen verkleinerbar ist und in dem eine Flüssigkeit enthalten ist. Der Behälter 1 ist mit einem Ende, an das eine Abflussleitung 3 anschließt, an einem nicht verschiebbaren Teil der Lenksäule 11 fixiert, während am anderen Ende ein Kolben 17 an einem verschiebbaren Teil der Lenksäule 11 ansteht oder fixiert ist. Bei einem Aufprall kann sich die Lenksäule 11 verkürzen und die im Behälter 1 enthaltene Flüssigkeit wird mittels des Kolbens 17 durch eine Öffnung 4 und einen anschließenden Austrittskanal 5 in die Abflussleitung 3 ausgedrückt, wobei an der Öffnung 4 am Übergang in den Austrittskanal 5 eine Gegenkraft erzeugt wird, die das Auspressen der Flüssigkeit erschwert, sodass Aufprallenergie absorbiert wird. Bevorzugt ist die Flüssigkeit in einer Kapsel 21 eingeschlossen, wobei die Kapsel 21 in den Behälter 1 eingesetzt ist und die Kapsel 21 die Öffnung 4 überdeckt. Die Kapsel 21 ist insbesondere derart ausgebildet, dass im Falle der Überschreitung eines vordefinierten Drucks der Flüssigkeit, die Kapsel an einem vordefinierten Wandbereich 28 aufplatzt. Mit Vorzug ist im eingebauten Zustand der Kapsel der Wandbereich 28 der Öffnung 4 zugewandt. Der Behälter 1 bzw. die Kapsel 21 ist mit einer magnetorheologischen Flüssigkeit gefüllt und der Austrittskanal 5 von einer Einrichtung 2 zur Erzeugung eines veränderbaren Magnetfeldes umgeben. Die Einrichtung 2 umfasst einen Elektromagneten, über den ein Magnetfeld erzeugt oder das Magnetfeld eines Permanentmagneten beeinflusst wird. Der Elektromagnet kann über Signale von Sensoren, die einen Aufprall überwachen, in Abhängigkeit von verschiedenen Kriterien, wie Gewicht und Sitzposition des Fahrers usw., angesteuert werden, wobei das veränderliche Magnetfeld die Viskosität der durch die Öffnung 4 zu drückenden magnetorheologischen Flüssigkeit verändert, und die Gegenkraft größer oder kleiner wird.

Die Einrichtung 2 zur Erzeugung des veränderbaren Magnetfeldes weist einen C-förmigen Block 6 aus Eisen od. dgl, auf, dem eine Spule 7 zugeordnet ist. Der Austrittskanal 5 durchsetzt den Spalt 9 zwischen den beiden Polflächen des Blockes 6, sodass die Feldlinien 10 den Austrittskanal 5 im Wesentlichen senkrecht zur Strömungsrichtung des Mediums durchsetzen (Fig. 3).

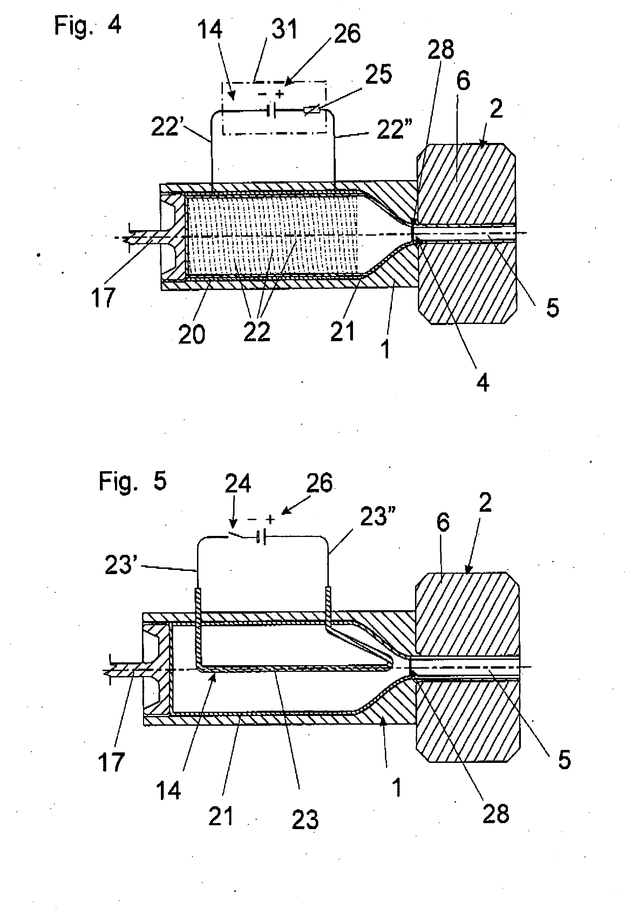

Um nun auf Temperaturänderungen, insbesondere Kälte, zurückzuführende Viskositätsänderungen der im Behälter 1 bzw. in der Kapsel 21 eingeschlossenen magnetarheologischen Flüssigkeit auszugleichen und jene Werte der Gegenkraft an der Öffnung 4 sicherzustellen, die für die gewünschte Energieabsorption notwendig sind, ist die Vorrichtung mit einer elektrischen Heizeinrichtung 14 versehen, die in Fig. 2 nur schematisch angedeutet dem Behälter 1 zugeordnet ist, und anhand der Fig. 4 bis 7 näher beschrieben wird.

Fig. 4 zeigt einen Längsschnitt durch eine erste Ausführung der Vorrichtung. Der Behälter 1 weist einen Füllraum auf, der durch Verschieben des Kolbens 17 aufgrund eines Aufpralls od. dgl. verkleinert werden kann, wobei die eingesetzte Kapsel 21 zerstört wird, und die enthaltene Flüssigkeit durch die Öffnung 4 ausgepresst wird. Die Querschnittsfläche des Behälters 1 ist bevorzugt zylindrisch, kann aber auch beispielsweise quadratisch sein. Die Innenwand des Behälters 1 ist mit einer Flächenheizfolie 20 oder ähnlichem ausgekleidet, deren strichliert gezeigte Heizdrähte 22 mit stilisierten Anschlüssen 22', 22" durch den Behälter 1 nach außen geführt und mit einer Stromquelle 26 verbunden sind. Ein temperaturabhängiger Widerstand 25, der den Stromfluss bei vorgegebener Versorgungsspannung mit steigender Temperatur reduziert, ist im elektrischen Stromkreis in Reihe mit dem Heizdraht angeordnet.. Beispielsweise kann hier ein PTC-Widenstand angeordnet sein, der die Stromleitung nur bei tiefen Temperaturen ermöglicht, und sie unterbindet, wenn die Messstelle die gewünschte Temperatur erreicht hat. Idealerweise ist der temperaturabhängige Widerstand thermisch mit dem Medium gekoppeit.

Fig. 5 zeigt eine Ausführung, bei der ein aus Gründen der Deutlichkeit innerhalb der Kapsel 21 überdimensioniert gezeichneter Heizdraht 23 sich mittig durch die Kapsel erstreckt. Seine Anschlussenden 23', 23" sind nach außen geführt und mit einer Stromquelle 26 verbunden. In den Stromkreis ist in dieser Ausführung ein Temperaturschalter 24 eingesetzt, der die Heizung bei Erreichen der Temperatur abschaltet, die dem gewünschten Gegenkraftbereich entspricht. Der Temperaturschalter 24 ist mit dem Behälter 1, der Kapsel 21, der Flüssigkeit oder einem anderen Element der Vorrichtung thermisch verbunden.

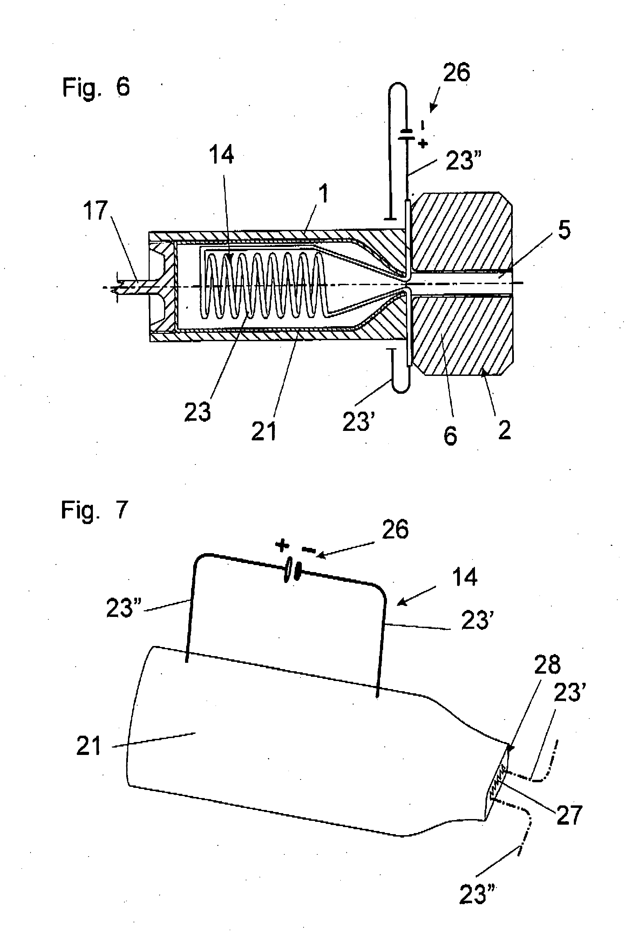

In Fig. 6 ist eine dritte Ausführung gezeigt, in der die Kapsel.21 einen gewendelten Heizdraht 23 enthält, dessen Anschlussenden 23', 23" aus der Kapsel an der Seite der Öffnung 4 des Behälters 1 nach außen geführt und mit der Stromquelle 26 verbunden sind. Der Heizdraht 23 kann beispielsweise insgesamt aus einem PTC-Material gefertigt sein, so dass kein zusätzliches Schalt- oder Regelelement notwendig ist.

Fig. 7 zeigt in Schrägansicht eine Kapsel 21, die mit einer Heizeinrichtung 14 versehen ist und bei der die Anschlüsse 23', 23" entweder mit ausgezogenen Linien am Umfang oder strichliert an der zur Öffnung 4 gerichteten Stirnseite nach außen geführt sind. Wenn die Kapsel 21 nach dem Befüllen mit dem Medium und dem Einsetzen der Heizeinrichtung 14 mit einer Klebe- oder Schweißnaht 27 verschlossen wird, so sind die Anschlussenden 23', 23" bevorzugt in der Schweißnaht 27 nach außen geführt.

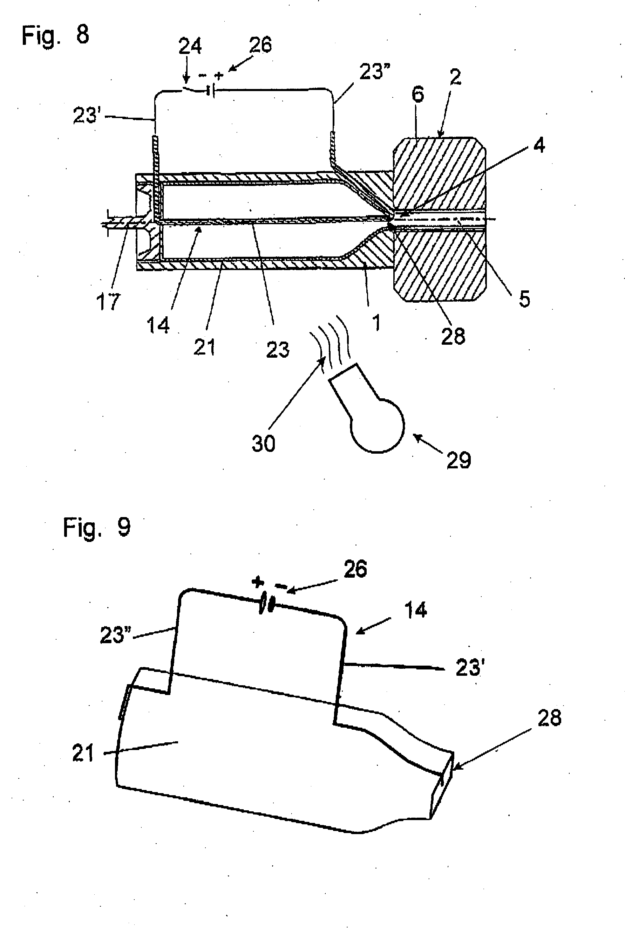

Fig. 8 und 9 veranschaulichen eine Variante der Heizeinrichtung, bei der der Heizdraht 23 die Kapsel 21 in Längsrichtung, die im eingebauten Zustand der Kapsel mit der Richtung der Kolbenbewegung im Crashfall übereinstimmt, durchdringt. Der Heizdraht 23 ist an der dem Kolben zugewandten Seite der Kapsel 21 aus dem Behälter 1 und das andere Ende des Heizdrahtes 23 wird, an der der Öffnung 4 zugewandten Seite der Kapsel 21 aus dem Behälter herausgeführt und ist mit der Stromversorgung und im Beispiel mit dem PTC-Widerstand verbunden. In diesem Fall kann die Kapsel fertig hergestellt und mit der Flüssigkeit befüllt sein. Erst im Anschluss wird der Heizdraht durch die Wand der Kapsel durchgeführt

Fig. 8 veranschaulicht die Möglichkeit, die Flüssigkeit zu kühlen, was bei sehr hohen Außentemperaturen vorteilhaft ist. Dies kann in einfacher Weise durch eine im Fahrzeug bereits vorhandene Klimaanlage erreicht werden. Mit Vorzug ist eine Austrittsdüse 29 einer Lüftungs- und/oder Klimatisierungseinrichtung des Kraftfahrzeugs so angeordnet, dass der Luftstrahl 30 die Energie absorbierende Einrichtung umspült. Eine weitere Ausführung kann eine eigene Kühlvorrichtung für die Energie absorbierende Einrichtung wie beispielsweise Peltierelemente enthalten.

Es ist offensichtlich, dass die verschiedenen in den Ausführungsbeispielen gezeigten Varianten auch anders kombiniert werden können. So kann in jeder Ausführung die Kühlung vorhanden sein oder nicht. Der temperaturabhängige Schalter und/oder Widerstand kann für alle Arten der Anordnung des Heizdrahts vorhanden sein oder nicht. Auch kann in allen Fällen eine zusätzliche Einrichtung zur Steuerung der Heizleistung vorgesehen sein.

Die Anordnungen des Heizdrahtes können, auch wenn in den Beispielen anders gezeigt stets in den Ausführungsformen mit geschlossener Kapsel oder auch in den Ausführungsformen, bei denen die Flüssigkeit nur durch einen Verschluss des Behälters 1 im System gehalten ist, sehr unterschiedlich sein, insbesondere entsprechend jeder in den Figuren veranschaulichten Variante.

Für eine Vielzahl von Anwendungsfällen ist davon auszugehen, dass die erfindungsgemäße Vorrichtung auf keinen Fall unmittelbar bei Betriebnahme eines Fahrzeuges benötigt wird, da nach dem Starten des Fahrzeuges bis zum Erreichen einer Geschwindigkeit, die den Einsatz entsprechender Energieabsorptionssysteme im Falle eines Crashs erforderlich macht, stets eine gewisse Zeit vergeht. Entsprechend bleibt ausreichend Zeit, um das Medium auch bei kältesteter Außentemperatur auf eine vorbestimmte, vorgebbare Mindesttemperatur zu erwärmen. Der Behälter 1 hat beispielsweise ein Füllvolumen von 16 bis 20 ml, die mittels einer Heizfolienauskleidung innerhalb von etwa 90 Sekunden von -40°C auf +20°C erwärmt werden, wobei eine Heizleistung von etwa 60 W erforderlich ist. Ein in der Kapsel 21 angeordneter Heizdraht kann beispielsweise bei einer Leistung von 24 W das Medium innerhalb von etwa 120 Sekunden um 30°C erwärmen, somit ist also auch bei dieser eher geringen Leistung das Medium in wenigen Minuten auf eine Normaltemperatur von etwa +20°C aufgeheizt.

## Patentansprüche

1. Energie absorbierende Vorrichtung für den Insassenschutz in Fahrzeugen, mit einem fließfähigen Medium, das bei einer äußeren Krafteinwirkung durch mindestens eine eine Gegenkraft bestimmende Öffnung (4) gedrückt wird, **gekennzeichnet durch** eine Einrichtung (14) zur Beeinflussung der Temperatur des fließfähigen Mediums.

2. Vorrichtung nach Anspruch 1 mit einem Behälter (1), der die Öffnung (4) aufweist, **dadurch gekennzeichnet, dass** die Einrichtung (14) zur Beeinflussung der Temperatur des fließfähigen Mediums der Behälterwandung zugeordnet ist.

3. Vorrichtung nach Anspruch 1 oder 2, **dadurch gekennzeichnet, dass** das fließfähige Medium in einer Kapsel (21) enthalten ist, die sich beim Aufprall öffnet, und dass die Einrichtung (14) zur Beeinflussung der Temperatur des fließfähigen Mediums der Kapsel (21) zugeordnet ist.

4. Vorrichtung nach einem der Ansprüche 1 bis 3, **dadurch gekennzeichnet, dass** die Einrichtung (14) zur Beeinflussung der Temperatur des fließfähigen Mediums eine Heizeinrichtung ist.

5. Vorrichtung nach Anspruch 4, **dadurch gekennzeichnet, dass** ein Temperaturschalter vorgesehen ist, der die Heizeinrichtung (14) steuert.

6. Vorrichtung nach Anspruch 4 oder 5, **dadurch gekennzeichnet, dass** die Einrichtung (14) zur Beeinflussung der Temperatur des fließfähigen Mediums einen Heizdraht (22) umfasst, der in die Wandung des Behälters (1) oder der Kapsel (21) eingebettet ist.

7. Vorrichtung nach Anspruch 4 oder 5, **dadurch gekennzeichnet, dass** die Einrichtung (14) zur Beeinflussung der Temperatur des fließfähigen Mediums einen Heizdraht (23) umfasst, der die Kapsel (21) durchsetzt.

8. Vorrichtung nach Anspruch 6 oder 7, **dadurch gekennzeichnet, dass** sich der Heizdraht (23) in der Kapsel (21) mittig erstreckt.

9. Vorrichtung nach Anspruch 6 oder 7, **dadurch gekennzeichnet, dass** der Heizdraht (23) in der Kapsel (21) gewendelt ist.

10. Vorrichtung nach einem der Ansprüche 7 bis 9, **dadurch gekennzeichnet, dass** der Heizdraht (23) elektrisch isoliert ist.

11. Vorrichtung nach einem der Ansprüche 1 bis 10, **dadurch gekennzeichnet, dass** die Einrichtung (14) zur Beeinflussung der Temperatur des fließfähigen Mediums einen temperaturabhängigen Widerstand (25) oder einen temperaturabhängigen Schalter (24) umfasst.

12. Vorrichtung nach einem der Anspruch 6 bis 11, **dadurch gekennzeichnet, dass** der Heizdraht (22, 23) aus einem temperaturabhängigen Widerstandsmaterial besteht.

13. Vorrichtung nach einem der Ansprüche 1 bis 13, **dadurch gekennzeichnet, dass** das Medium eine magnetorheologische Flüssigkeit ist, und die Gegenkraft im Bereich der Öffnung (4) durch ein veränderbares Magnetfeld (10) regelbar ist.

14. Vorrichtung nach einem der Ansprüche 1 bis 13, **dadurch gekennzeichnet, dass** die Einrichtung (14) zur Beeinflussung der Temperatur des fließfähigen Mediums einen Regelkreis (31) beinhaltet.

15. Lenksystem für ein Kraftfahrzeug mit einer Energie absorbierenden Vorrichtung, **dadurch gekennzeichnet, dass** die Energie absorbierende Vorrichtung entsprechend einem oder mehreren der vorhergehenden Ansprüche ausgebildet ist.
